# EUROPÄISCHE PATENTSCHRIFT

(11) **EP 0 654 599 B1**
(45) Veröffentlichungstag und Bekanntmachung des Hinweises auf die Patenterteilung: **05.11.1997**
(21) Anmeldenummer: 94114196.2
(22) Anmeldetag: 09.09.1994
(51) Int. Cl.: F02M 25/07, F16L 13/02, F16L 13/14

(54) **Einrichtung zur Abgasrückführung**
Exhaust gas recirculation device
Dispositif de recirculation des gaz d'échappement

(30) Priorität: 19.10.1993 DE 9315921 U
(43) Veröffentlichungstag der Anmeldung: 24.05.1995
(73) Patentinhaber: Gustav Wahler GmbH u. Co, D-73730 Esslingen (DE)
(72) Erfinder: Wahler, Dieter, Dipl.-Ing., D-73732 Esslingen (DE)
(74) Vertreter: Kratzsch, Volkhard, Dipl.-Ing.

(56) Entgegenhaltungen:
- WO-A-93/20376
- DE-A- 3 511 638
- DE-A- 3 717 752
- DE-C- 522 993
- DE-C- 601 171
- DE-C- 4 301 655
- GB-A- 477 476
- GB-A- 709 794
- US-A- 2 555 256
- US-A- 4 103 937
- US-A- 5 158 061
- US-A- 5 188 086

## Beschreibung

Die Erfindung bezieht sich auf eine Einrichtung zur Abgasrückführung mit den Merkmalen im Oberbegriff des Anspruchs 1.

Bei Einrichtungen zur Abgasrückführung besteht die Leitung meist aus hochwertigem Material, z.B. legierten und warmfesten Stahl, der nichtrostend ist, damit die Leitung, die vom heißen und aggressiven Abgas durchströmt ist, den Belastungen standhalten kann. Wegen der heißen Abgase muß die Leitung auch temperaturfest sein. Der Anschluß des Ventils an die Leitung verlangt eine dichte, temperaturfeste und schwingungsfeste Verbindung, wobei die Einrichtung auch noch Montagetoleranzen aufnehmen können muß. Das Ventil ist meist aus temperaturfestem Guß hergestellt, z.B. aus Aluminium-Druckguß. Diese Materialien der Leitung und des Ventilgehäuses gestatten bei direkter Verbindung nur mechanische Verbindungen, z.B. solche mittels Schrauben oder Schellen, die montageaufwendig und platzaufwendig sind und relativ hohe Kosten bedingen. Dabei ist eine absolute Dichtheit, Schwingungsfestigkeit und Temperaturfestigkeit auf Dauer nicht zuverlässig garantiert.

Es ist eine Einrichtung zur Abgasrückführung der eingangs genannten Art bekannt (US-A-51 88 086), bei der ein zum Ventil etwa koaxial ausgerichteter Leitungsabschnitt über ein Zwischenstück mit dem zugewandten Ende des Ventilgehäuses verbunden ist. Dieses Zwischenstück besteht aus einem schweißbaren oder lötbaren Metall und ist mit dem zugewandten Ende des Leitungsabschnitts der Leitung durch Löten, insbesondere Hartlöten, verbunden. Das Zwischenstück ist somit Teil des Leitungsabschnitts. Zur Verbindung dieses Zwischenstückes mit dem Ventilgehäuse greift das Zwischenstück mit einem Endabschnitt, der dem Ventilgehäuse zugewandt ist, an letzterem an. Hierzu ist am Ende des Zwischenstücks ein radial überstehender Bund vorgesehen, der als Axialanschlag für eine auf dem Zwischenstück sitzende Uberwurfmutter dient, welche für die Befestigung auf einen endseitigen Gewindeabsatz des Ventilgehäuses aufschraubbar ist. Die Verbindung zwischen dem Zwischenstück und dem Ventilgehäuse ist somit eine lösbare. Aufgrunddessen stellt das Ventilgehäuse im Verhältnis zum Zwischenstück ein eigenständiges Bauteil dar, wodurch nicht dem Bedürfnis entsprochen wird, ein für die Verbindung mit dem Leitungsabschnitt der Leitung fertiges Ventilgehäuse bereitzustellen.

Aus US-A-51 58 061 ist eine Einrichtung zur Abgasrückführung bekannt, bei der die Leitung mit einem Ende am motorseitigen Abgasteil und mit ihrem anderen Ende am Ventilgehäuse des Ventils jeweils mittels Muttern lösbar befestigbar ist, wobei vermerkt ist, daß für eine dichte Verbindung an jedem Ende der Leitung vielfältige Verbinder verwendet werden können. Die Leitung ist auf einem Bereich zwischen den beiden Enden geteilt, wobei ein Leitungsabschnittende in das Ende des anderen Leitungsabschnittes eingesteckt ist unter Zulassung einer relativen Gleitverschieblichkeit zwischen beiden Leitungsabschnitten. Dieser Bereich der Steckverbindung ist umgeben von einem Wellrohr, das mit einem Ende am einen Leitungsabschnitt und mit dem anderen Ende am anderen Leitungsabschnitt jeweils durch Schweißen fest und gasdicht befestigt ist. Die Gleitverbindung einschließlich des Wellrohres erlaubt eine relative Axialverschiebung der Leitungsabschnitte relativ zueinander und somit eine Anpassung an Längenänderungen durch Temperatureinfluß, wobei das Wellrohr die Gasdichtigkeit der Verbindung zwischen beiden Leitungsabschnitten sichert. Das Problem, wie eine aus einem warmfesten, nicht rostenden und auch heißen und aggressiven Abgasen standhaltenden Material beschaffene Leitung mit einem aus temperaturfestem Guß hergestellten Ventilgehäuse einfach, kostengünstig und standfest verbunden wird, ist hierbei durch eine Schraubverbindung nicht oder nur unzulänglich gelöst.

Der Erfindung liegt die Aufgabe zugrunde, eine Einrichtung zur Abgasrückführung zu schaffen, bei der das Ventil mit seinem Ventilgehäuse ein für den Anschluß des Leitungsabschnittes daran fertiges Gebilde darstellt und dadurch der Anschluß einfacher und kostengünstiger ist und standfester gestaltet werden kann.

Die Aufgabe ist bei einer Einrichtung der eingangs genannten Art gemäß der Erfindung durch die Merkmale im Anspruch 1 gelöst. Vorteilhafte weitere Erfindungsmerkmale und Ausgestaltungen ergeben sich aus den Ansprüchen 2 bis 18. Bei der Einrichtung gemäß der Erfindung ist das Zwischenstück am Ende des Ventilgehäuses in der Weise fest angebracht, daß der Endabschnitt des Zwischenstücks im Material des Ventilgehäuses durch Eingießen verankert ist oder daß der Bund des Zwischenstücks formschlüssig in eine Ringnut am Ventilgehäuse eingreift oder daß ein Ring am Bund des Zwischenstücks auf der äußeren Umfangsfläche eines zylindrischen Ventilgehäuseabsatzes mit Preßsitz gehalten ist. In allen Fällen ist von vornherein zwischen dem Endabschnitt des Zwischenstückes einerseits und dem Ventilgehäuse andererseits eine feste Verbindung geschaffen, wodurch der Endabschnitt des Zwischenstücks von vornherein fester Bestandteil des Ventilgehäuses und nicht etwa des Leitungsabschnittes ist. Dies hat den Vorteil, daß das fertige Ventilgehäuse mitsamt dem daran festen Zwischenstück als fertiges Bauteil bereitgestellt werden kann, an dem nun der Leitungsabschnitt durch Schweißen oder Löten befestigt werden kann. Durch diese Gestaltung ist eine Schweißbarkeit bzw. Lötbarkeit im Verbindungsbereich zwischen dem Ventilgehäuse und dem Leitungsabschnitt ermöglicht, wobei diese Verbindung eine Dichtheit, Schwingungsfestigkeit und Temperaturfestigkeit gewährleistet und auch die Aufnahme von Montagetoleranzen ermöglicht.

WeitereEinzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische, teilweise geschnittene Seitenansicht einer Einrichtung zur Abgasrückführung, gemäß einem ersten Ausführungsbeispiel und vor dem Verschweißen,
- Fig. 2: eine schematische, zum Teil geschnittene Seitenansicht eines Teils der Einrichtung in Fig. 1 nach dem Verschweißen,
- Fig. 3 bis 6: jeweils eine schematische, teilweise gegeschnittene Seitenansicht etwa entsprechend derjenigen in Fig.2 eines Teils einer Einrichtung zur Abgasrückführung gemäß einem zweiten bzw.dritten bzw. vierten bzw. fünften Ausführungsbeispiel.

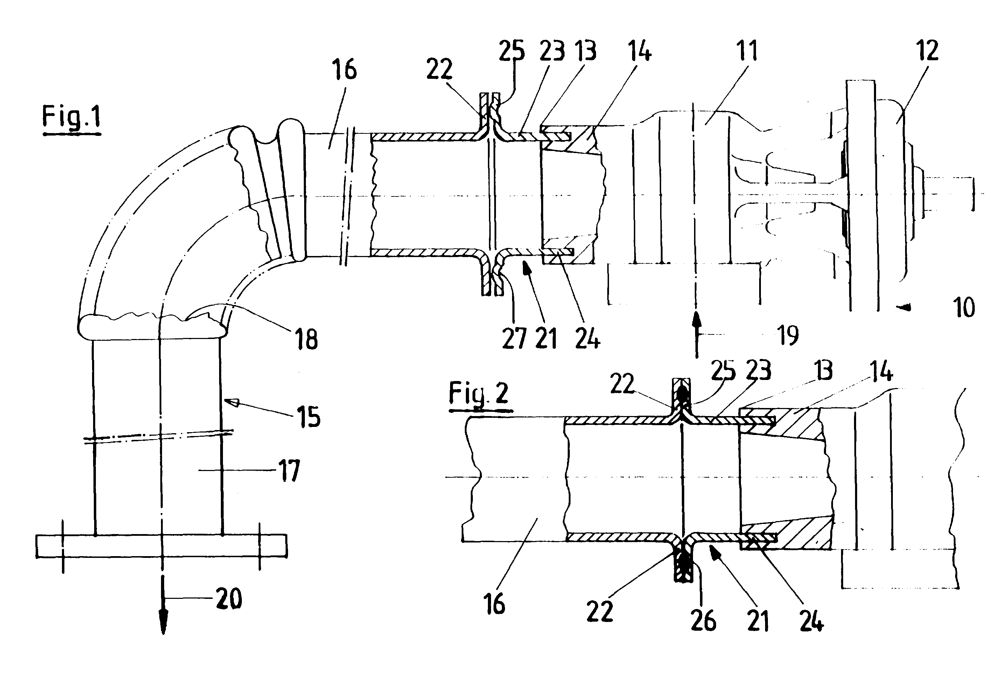

In Fig. 1 und 2 ist schematisch ein Teil einer Einrichtung 10 zur Abgasrückführung dargestellt. Die Einrichtung 10 weist ein Ventil 11 auf, das z. B. von einer Unterdruckdose 12 gesteuert wird. Koaxial ist an das im wesentlichen zylindrische Ende 13 des Ventilgehäuses 14 eine Leitung 15 angeschlossen, die etwa wie ein Rohrknie verläuft, wobei die beiden linear verlaufenden Leitungsabschnitte 16 und 17 zueinander etwa rechtwinklig ausgerichtet und über ein Wellrohr 18 miteinander verbunden sind. Bei mehr oder weniger geöffnetem Ventil 11 gelangt das zurückzuführende Abgas, vom Sammelrohr kommend, in Richtung des Pfeiles 19 in das Ventil 11 und von dort in die Leitung 15, die es bei 20 verläßt, um der Ansaugluft beigemischt zu werden. Auch eine gegensinnige Strömungsrichtung ist möglich.

In der Regel besteht die Leitung 15 aus einem nichtrostenden, legierten Stahl, z. B. aus einem Chrom-Nickel-legierten Stahl. Auch ein hochwarmfester legierter Stahl kann in Betracht kommen. Da die Leitung 15 vom heißen und aggressiven Abgas durchströmt ist, ist aus Gründen einer langen Lebensdauer ein derartiges hochwertiges Material notwendig. Dabei muß die Leitung 15 temperaturfest, schwingungsfest und dicht sein. Außerdem wird angestrebt, daß von der Leitung 15 auch noch Montagetoleranzen aufgenommen werden können.

Das Ventilgehäuse 14 des Ventils 11 wurde früher aus einem temperaturfestn Gußmaterial gebildet und besteht heutzutage in aller Regel aus Aluminium-Druckguß. Diese verschiedenen Materialien des Ventilgehäuses 14 einerseits und der Leitung 15 andererseits werfen Probleme im Bereich der Verbindungsstelle auf, wo der Leitungsabschnitt 16 an das Ende 13 des Ventilgehäuses 14 angeschlossen ist. Eine bisher bekannte Schraubverbindung oder eine Verbindung mittels einer V-Band-Schelle aus hochwarmfestem Material ist sehr teuer, zeitaufwendig und auch platzaufwendig.

Statt dessen ist in Fig. 1 bis 8, also bei allen rungsbeispielen, vorgesehen, daß der Leitungsabschnitt 16 (Fig. 1) mit seinem Ende kraftschlüssig und/oder formschlüssig unmittelbar oder mittelbar mit dem Ende 13 des Ventilgehäuses 14 dicht sowie schwingungs- und temperaturfest verbunden ist.

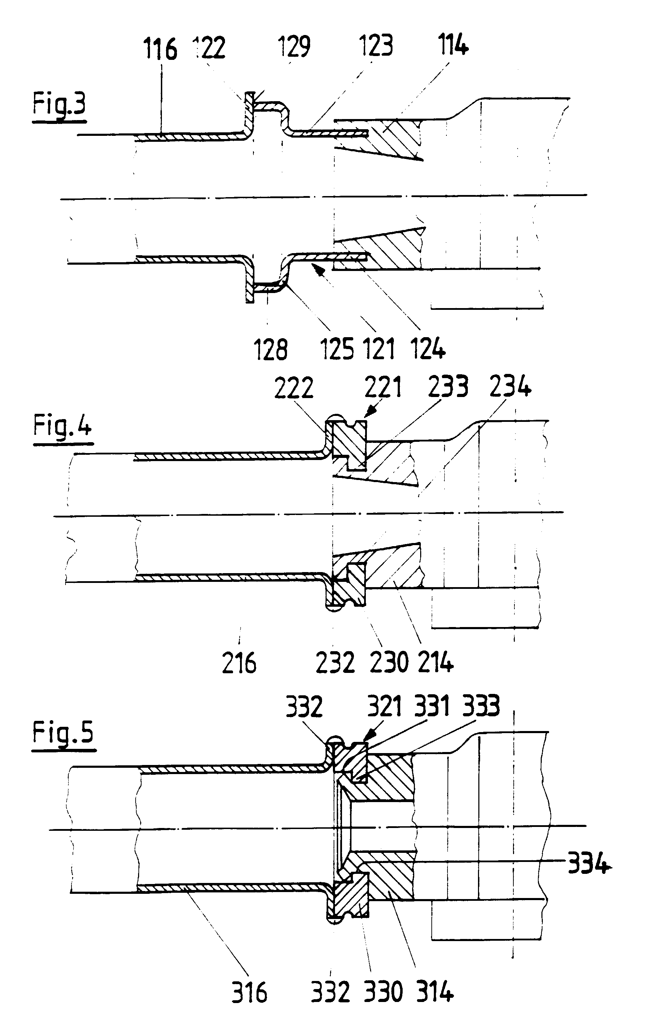

Beim ersten Ausführungsbeispiel in Fig. 1 und 2 ist am Ende 13 des Ventilgehäuses ein besonderes Zwischenstück 21 fest abgebracht, das aus seinem schweißbaren oder lötbaren Metall besteht. Der Leitungsabschnitt 16 ist mit seinem Ende mit diesem Zwischenstück 21 durch Schweißen bzw. Löten verbunden. Die Verbindung erfolgt beim ersten Ausführungsbeispiel durch Widerstandsschweißung, wobei aber statt dessen auch eine Schmelzschweißung möglich ist, wie sie bei den Ausführungsbeispielen in Fig. 4 bis 6 vorgesehen ist. Bei einem anderen, nicht gezeigten Ausführungsbeispiel ist der Leitungsabschnitt 16 durch Hartlötung mit dem Zwischenstück 21 verbunden.

Das Zwischenstück 21 besteht entweder aus einfachem Stahl, z. B. ST37,oder es ist statt dessen aus legiertem Stahl, z. B. hochwarmfestem Stahl, gebildet.

Der Leitungsabschnitt 16 weist einen radial nach außen gerichteten Befestigungsflansch 22 an dem freien Ende auf, das dem Ende 13 des Ventilgehäuses 14 zugewandt ist. Das Zwischenstück 21 ist aus einem Rohrteil 23 gebildet, der mit einem dem Ventilgehäuse 14 zugewandten, rohrförmigen Endabschnitt 24 koaxial in das Material des Ventilgehäuses 14 eingreift, insbesondere darin verankert ist und z. B. darin eingelassen, insbesondere eingegossen, ist. Im letztgenannten Fall ist somit das Zwischenstück 21, insbesondere der Rohrteil 23, gleich bei der Herstellung des Ventilgehäuses 14 aus Aluminiumdruckguß mit in die Form eingelegt, so daß das Zwischenstück 21 gleich bei der Herstellung des Ventilgehäuses 14 fest darin eingegossen wird. Diese Methode ist besonders einfach und kostengünstig.

Es versteht sich, daß dabei der Rohrteil 23, insbesondere dessen Endabschnitt 24,noch einzelne abstehende Verankerungselemente, z. B. Ausklinkungen od. dgl.,aufweisen kann, um auf diese Weise zusätzliche formschlüssige Sicherungsmittel gegen Herausreißen des Rohrteils 23 aus dem Ende 13 des Ventilgehäuses 14 zu schaffen.

Der Rohrteil 23 weist einen Flansch 25 auf, der sich an den Endabschnitt 24 anschließt und radial nach außen gerichtet ist. Dieser Flansch 25 liegt am Befestigungsflansch 22 des Leitungsabschnitts 16 in Axialrichtung an. Beide Flansche 22, 25 sind durch eine Widerstandsringschweißnaht 26 dicht sowie schwingungs- und temperaturfest miteinander verbunden. Einer der beiden Flansche 22, 25, beim gezeigten Ausführungsbeispiel (Fig. 1) der Flansch 25 des Rohrteils 23, weist eine ringsum laufende und zum Befestigungsflansch 22 hin vorstehende Sicke 27 vor dem Herstellen der Widerstandsringschweißnaht 26 auf. Im Bereich der Sicke 27 wird beim Schweißvorgang die Widerstandsringschweißnaht 26 gebildet, vorzugsweise unter Beseitigung der Sicke 27, wobei dann die Flansche 22 und 25 im wesentlichen zwischenraumfrei aneinanderliegen (Fig. 2). Auf diese Weise ist eine reproduzierbar dichte, schwingungsfeste und temperaturfeste Verbindung zwischen dem Leitungsabschnitt 16 und dem Ventilgehäuse 14 in einfacher, kostengünstiger und platzsparender Weise möglich.

Bei dem in Fig. 3 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Beim zweiten Ausführungsbeispiel ist die Befestigung des Zwischenstücks 121 am Ventilgehäuse 114 die gleiche wie beim ersten Ausführungsbeispiel. Das Zwischenstück 121 besteht aus einem Rohrteil 123, dessen zylindrischer Endabschnitt 124 im Ventilgehäuse 114 eingegossen ist und von dem radial nach außen ein Flansch 125 abgeht. An den Flansch 125 schließt sich einstückig ein weiterer koaxialer Rohrteil 128 größeren Durchmessers an, der mit seiner freien Stirnkante 129 axial auf dem Befestigungsflansch 122 des Leitungsabschnitts 116 aufstößt und dort mit dem Befestigungsflansch 122 durch Schweißen, insbesondere Widerstandsschweißen, verbunden ist.

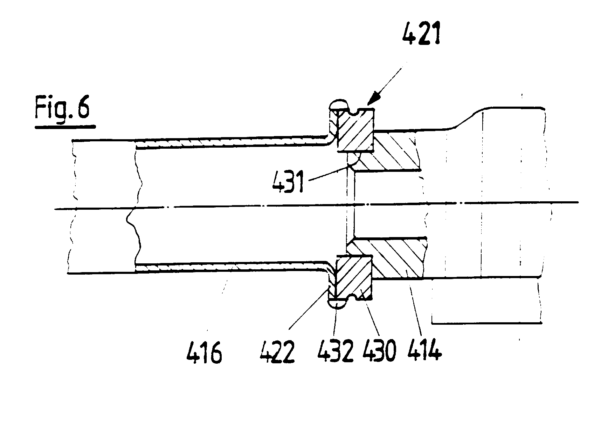

Beim dritten bis fünften Ausführungsbeispiel ist das jeweilige Zwischenstück 221 bzw. 321 bzw. 421 aus einem Ring gebildet, der in Fig. 4 und 5 z. B. zumindest im wesentlichen identisch ist und dort mit 230 bzw. 330 bezeichnet ist. Der Ring 230 bzw. 330 ist kraftschlüssig und/oder formschlüssig am Ventilgehäuse 214 bzw. 314 gehalten. Beim fünften Ausführungsbeispiel in Fig. 6 ist der Ring 430 allein kraftschlüssig dadurch gehalten, daß er auf einem zylindrischen Absatz 431 des Ventilgehäuses 414 durch Preßsitz gehalten ist. Bei allen Ausführungsbeispielen in Fig. 4 bis 6 liegt der Leitungsabschnitt 216 bzw. 316 bzw. 416 mit dem Flansch 222 bzw. 322 bzw. 422 an einer letzterem zugewandten axialen Stirnfläche des Ringes 230 bzw. 330 bzw. 430 an, wobei der Befestigungsflansch 222 bzw. 322 bzw. 422 mit dem Ring 230 bzw. 330 bzw. 430 durch eine Schmelzschweißnaht 232 bzw. 332 bzw. 432, z. B. durch eine WIG-Schweißung, verbunden ist. Die Schmelzschweißnaht 232, 332, 432 besteht aus einer äußeren, ringsum laufenden Ringnaht, die sich über den Außenrand des Befestigungsflansches 222 bzw. 322 bzw. 422 und über einen Teil des Außenrandes des Ringes 230 bzw. 330 bzw. 430 erstreckt.

Beim dritten Ausführungsbeispiel (Fig. 4) und fünften Ausführungsbeispiel (Fig. 6) ist der Ring 230 bzw. 430 auf der äußeren Umfangsfläche des zylindrischen Absatzes 231 bzw. 431 des Ventilgehäuses 214 bzw. 414 gehalten.

Beim Beispiel in Fig. 4 und 5 weist der Ring 230 bzw. 330 einen radial nach innen gerichteten Bund 233 bzw. 333 auf, der beim Ring 430 (Fig. 6) fehlt. Der Ring 230 bzw. 330 greift mit diesem Bund 233 bzw. 333 in eine letzterem etwa entsprechende Ringnut 234 bzw. 334 im zylindrischen Absatz 231 bzw. 331 des Ventilgehäuses 214 bzw. 314 ein. Beim dritten Ausführungsbeispiel (Fig. 4) ist der Ring 230 mit dem Bund 233 in die Ringnut 234 des Ventilgehäuses 214 eingelassen, vorzugsweise eingegossen. In diesem Fall ist somit der Ring 230 gleich bei der Formgebung des Ventilgehäuses 214 mit in dessen Form eingelegt, so daß der Ring 230 vom Aluminiummaterial beim Druckgußprozeß umgossen wird.

Beim vierten Ausführungsbeispiel (Fig. 5) ist der Ring 330 durch eine Bördelbefestigung am Ventilgehäuse 314 gehalten. In diesem Fall greift der Ring 330 mit dem Bund 333 dadurch in die Ringnut 334 ein, daß der zylindrische Absatz 331 an dem Ende, das zum Befestigungsflansch 322 weist, von innen nach außen und dabei hinter dem Bund 333 umgebördelt ist. In diesem umgebördelten Zustand, den Fig. 5 zeigt, befindet sich somit der hochgebördelte Teil des zyklindrischen Absatzes 331 axial zwischen dem Befestigungsflansch 322 und dem Bund 333.

## Patentansprüche

1. Einrichtung zur Abgasrückführung, mit einem Ventil (11) und einer Leitung (15) mit einem zum Ventil (11) etwa koaxialen Leitungsabschnitt (16), der über ein aus einem schweißbaren oder lötbaren Material bestehendes und mit dem Ende des Leitungsabschnitts (16) durch Schweißen oder Löten verbundenes Zwischenstück (21) mit dem Ende des Ventilgehäuses (14) verbunden ist, wozu das Zwischenstück (21) mit einem dem Ventilgehäuse (14) zugewandten Endabschnitt oder Bund oder Ring am Ventilgehäuse (14) angreift,
**dadurch gekennzeichnet,**
daß das Zwischenstück (21; 121; 221; 321; 421) am Ende (13) des Ventilgehäuses (14; 114, 214, 314; 414) in der Weise fest angebracht ist, daß dessen Endabschnitt (24; 124) im Ventilgehäuse (14; 114) durch Eingießen in dessen Material verankert ist oder daß dessen Bund (233; 333) in eine dem Bund (233; 333) etwa entsprechende Ringnut (234; 334) in einem zylindrischen Absatz (231; 331) des Ventilgehäuses (214;314) formschlüssig eingreift oder daß dessen Ring (430) auf der äußeren Umfangsfläche eines zylindrischen Absatzes (431) des Ventilgehäuses (414) mit Preßsitz gehalten ist.

2. Einrichtung nach Anspruch 1,
**dadurch gekennzeichnet,**
daß das Zwischenstück (221; 321; 421) aus einem Ring (230; 330; 430) gebildet ist, der den radial nach innen gerichteten Bund (233; 333) aufweist.

3. Einrichtung nach Anspruch 2,
**dadurch gekennzeichnet,**
daß der Ring (230) mit dem Bund (233) in die Ringnut (234) des Ventilgehäuses (214) eingegossen ist.

4. Einrichtung nach Anspruch 2,
**dadurch gekennzeichnet,**
daß der Ring (330) mit dem Bund (333) dadurch in die Ringnut (334) eingreift, daß der zylindrische Absatz (331) an dem Ende, das zu einem Befestigungsflansch (322) des Leitungsabschnitts (316) hinweist, von innen nach außen und dabei hinter dem Bund (333) umgebördelt ist.

5. Einrichtung nach Anspruch 1,
**dadurch gekennzeichnet,**
daß das Zwischenstück (21; 121) aus einem Rohrteil (23; 123) gebildet ist, dessen Endabschnitt (24; 124) vorzugsweise koaxial zum Ventilgehäuse (14; 114) ausgerichtet ist.

6. Einrichtung nach Anspruch 5,
**dadurch gekennzeichnet,**
daß der Rohrteil (23; 123) einen sich an den Endabschnitt (24; 124) anschließenden, radial nach außen gerichteten Flansch (25; 125) aufweist.

7. Einrichtung nach einem der Ansprüche 1 bis 6,
**dadurch gekennzeichnet,**
daß der Leitungsabschnitt (16; 116; 216; 316; 416) durch Widerstandsschweißung mit dem Zwischenstück (21; 121; 221; 321; 421) verbunden ist.

8. Einrichtung nach einem der Ansprüche 1 bis 6,
**dadurch gekennzeichnet,**
daß der Leitungsabschnitt (16; 116; 216; 316; 416) durch Schmelzschweißung mit dem Zwischenstück (21; 121; 221; 321; 421) verbunden ist.

9. Einrichtung nach einem der Ansprüche 1 bis 6,
**dadurch gekennzeichnet,**
daß der Leitungsabschnitt (16; 116; 216; 316; 416) durch Hartlötung mit dem Zwischenstück (21; 121; 221; 321; 421) verbunden ist.

10. Einrichtung nach einem der Ansprüche 1 bis 9,
**dadurch gekennzeichnet,**
daß das Zwischenstück (21; 121; 221; 321; 421) aus legiertem Stahl gebildet ist.

11. Einrichtung nach einem der Ansprüche 1 bis 10,
**dadurch gekennzeichnet,**
daß das Zwischenstück (21; 121; 221; 321; 421) aus hochwarmfestem Stahl gebildet ist.

12. Einrichtung nach einem der Ansprüche 1 bis 11,
**dadurch gekennzeichnet,**
daß das Ventilgehäuse (14; 114; 214; 314; 414) aus Aluminium-Druckguß gebildet ist.

13. Einrichtung nach einem der Ansprüche 1 bis 12,
**dadurch gekennzeichnet**,
daß der Leitungsabschnitt (16; 116; 216; 316; 416) einen radial nach außen gerichteten Befestigungsflansch (22; 122; 222; 322; 422) aufweist.

14. Einrichtung nach einem der Ansprüche 6 bis 13,
**dadurch gekennzeichnet,**
daß der Flansch (25) des Rohrteils (23) am Befestigungsflansch (22) des Leitungsabschnitts (16) anliegt und beide Flansche (25, 22) durch eine Widerstandsringschweißnaht (26) miteinander verbunden sind.

15. Einrichtung nach einem der Ansprüche 6 bis 14,
**dadurch gekennzeichnet,**
daß ein Flansch (25, 22), insbesondere der Flansch (25) des Rohrteils (23), eine ringsum laufende und zum Befestigungsflansch (22) hin vorstehende Sicke (27) aufweist, in deren Bereich die Widerstandsringschweißnaht (26) gebildet wird, vorzugsweise unter Beseitigung der Sicke (27).

16. Einrichtung nach einem der Ansprüche 6 bis 13,
**dadurch gekennzeichnet,**
daß sich an den Flansch (125) des Rohrteils (123) ein weiterer, koaxialer Rohrteil (128) einstückig anschließt, der mit seiner freien Stirnkante (129) axial auf dem Befestigungsflansch (122) des Leitungsabschnitts (116) aufstößt und dort mit dem Befestigungsflansch (122) durch Schweißen, insbesondere Widerstandsschweißen, verbunden ist.

17. Einrichtung nach den Ansprüchen 2 und 13,
**dadurch gekennzeichnet,**
daß der Leitungsabschnitt (216; 316; 416) mit seinem Befestigungsflansch (222; 322; 422) an einer Stirnfläche des Ringes (230; 330; 430) axial anliegt und mit dem Ring (230; 330; 430) durch eine Schmelzschweißnaht (232; 332; 432), z. B. durch WIG-Schweißung, verbunden ist.

18. Einrichtung nach Anspruch 17,
**dadurch gekennzeichnet,**
daß die Schmelzschweißnaht (232; 332; 432) aus einer äußeren, ringsum laufenden Ringnaht besteht, die sich über den Außenrand des Befestigungsflansches (222; 322; 422) und einen Teil des Außenrandes des Ringes (230; 330; 430) erstreckt.

## Claims

1. Device for exhaust gas recirculation, with a valve (11) and a conduit (15) with a conduit section (16) approximately coaxial to the valve (11), said conduit section being connected to the end of the valve housing (14) via an intermediate piece (21) made of a welding or soldering material and connected to the end of the conduit section (16) by means of welding or soldering, for which purpose the intermediate piece (21) engages on the valve housing (14) with an end section or collar or ring facing the valve housing (14), characterised in that the intermediate piece (21; 121; 221; 321; 421) is firmly attached to the end (13) of the valve housing (14; 114; 214; 314; 414) such that its end section (24; 124) is anchored in the valve housing (14; 114) by being cast into its material; or that its collar (233; 333) positively engages into an approximately corresponding annular groove (234; 334) in a cylindrical shoulder (231; 331) of the valve housing (214; 314); or that its ring (430) is held in press fit on the outer peripheral surface of a cylindrical shoulder (431) of the valve housing (414).

2. Device according to Claim 1, characterised in that the intermediate piece (221; 321; 421) is formed from a ring (230; 330; 430) having the collar (233; 333) directed radially inwards.

3. Device according to Claim 2, characterised in that the ring (230) is cast into the annular groove (234) of the valve housing (214).

4. Device according to Claim 2, characterised in that the ring (330) with the collar (333) engages into the annular groove (334) because at the end pointing to a fastening flange (322) of the conduit section (316), the cylindrical shoulder (331) is beaded from the inside outwards and thus behind the collar (333).

5. Device according to Claim 1, characterised in that the intermediate piece (21; 121) is formed from a pipe portion (23; 123), the end section (24; 124) of which is preferably oriented coaxially to the valve housing (14; 114).

6. Device according to Claim 5, characterised in that the pipe portion (23; 123) has a flange (25; 125) connecting to the end section (24; 124) and directed radially outwards.

7. Device according to one of Claims 1 to 6, characterised in that the conduit section (16; 116; 216; 316; 416) is connected to the intermediate piece (21; 121; 221; 321; 421) by resistance welding.

8. Device according to one of Claims 1 to 6, characterised in that the conduit section (16; 116; 216; 316; 416) is connected to the intermediate piece (21; 121; 221; 321; 421) by fusion welding.

9. Device according to one of Claims 1 to 6, characterised in that the conduit section (16; 116; 216; 316; 416) is connected to the intermediate piece (21; 121; 221; 321; 421) by hard soldering.

10. Device according to one of Claims 1 to 9, characterised in that the intermediate piece (21; 121; 221; 321; 421) is formed from alloyed steel.

11. Device according to one of Claims I to 10, characterised in that the intermediate piece (21; 121; 221; 321; 421) is formed from high temperature steel.

12. Device according to one of Claims 1 to 11, characterised in that the valve housing (14; 114; 214; 314; 414) is formed from aluminium die casting.

13. Device according to one of Claims 1 to 12, characterised in that the conduit section (16; 116; 216; 316; 416) has a fastening flange (22; 122; 222; 322; 422) directed radially outwards.

14. Device according to one of Claims 6 to 13, characterised in that the flange (25) of the pipe portion (23) abuts against the fastening flange (22) of the conduit section (16), and both flanges (25, 22) are connected to one another by means of a resistance ring weld (26).

15. Device according to one of Claims 6 to 14, characterised in that a flange (25, 22), in particular the flange (25) of the pipe portion (23), has a circumferential bead (27) projecting towards the fastening flange (22), and in the region of said bead the resistance ring weld (26) is formed, preferably by removal of the bead (27).

16. Device according to one of Claims 6 to 13, characterised in that a further coaxial pipe portion (128) is connected in one piece onto the flange (125) of the pipe portion (123), said further pipe portion abutting axially on the fastening flange (122) of the conduit section (116) with its free end edge (129), and being connected there to the fastening flange (122) by means of welding, in particular resistance welding.

17. Device according to Claims 2 to 13, characterised in that the conduit section (216; 316; 416) abuts axially against an end face of the ring (230; 330; 430) with its fastening flange (222; 322; 422), and is connected to the ring (230; 330; 430) by means of a fusion weld (232; 332; 432), e.g. by TIG welding.

18. Device according to Claim 17, characterised in that the fusion weld (232; 332; 432) consists of an outer circumferential ring weld, which extends over the outer edge of the fastening flange (222; 322; 422) and a portion of the outer edge of the ring (230; 330; 430).

## Revendications

1. Dispositif de recyclage des gaz d'échappement comprenant une soupape (11) et une tubulure (15) munie d'un segment de tube (16) pratiquement coaxial par rapport à la soupape (11), qui est relié à l'extrémité de la cage de soupape (14) par l'intermédiaire d'une pièce de raccord (21) réalisée dans un matériau soudable ou brasable et assemblée par soudage ou brasage avec l'extrémité du segment de tube (16), la pièce de raccord (21) s'engageant dans la cage de soupape (14) par une extrémité orientée vers la cage de soupape (14) ou par un collet ou par une bague, caractérisé en ce que la pièce de raccord (21 ; 121 ; 221 ; 321 ; 421) est fixée par un assemblage permanent sur l'extrémité (13) de la cage de soupape (14 ; 114 ; 214 ; 314 ; 414), de sorte que l'extrémité (24 ; 124) de ladite pièce de raccord est ancrée dans la cage de soupape (14 ; 114) par moulage dans le matériau de cette dernière, ou en ce que le collet (233 ; 333) de ladite pièce de raccord pénètre par engagement positif dans une rainure annulaire (234 ; 334) correspondant pratiquement au collet (233 ; 333) et réalisée dans un épaulement cylindrique (231 ; 331) de la cage de soupape (214 ; 314) ou en ce que la bague (430) de ladite pièce de raccord est maintenue par ajustage serré sur la surface périphérique extérieure d'un épaulement cylindrique (431) de la cage de soupape (414).

2. Dispositif selon la revendication 1, caractérisé en ce que la pièce de raccord (221 ; 321 ; 421) est constituée par une bague (230 ; 330 ; 430), qui est munie du collet (233 ; 333) orienté dans le sens radial vers l'intérieur.

3. Dispositif selon la revendication 2, caractérisé en ce que la bague (230) est moulée avec le collet (233) dans la rainure annulaire (234) de la cage de soupape (214).

4. Dispositif selon la revendication 2, caractérisé en ce que la bague (330) s'engage avec le collet (333) dans la rainure annulaire (334), du fait que l'épaulement cylindrique (331), sur l'extrémité orientée vers une collerette de fixation (322) du segment de tube (316), est rabattu de l'intérieur vers l'extérieur et, de ce fait, à l'arrière du collet (333).

5. Dispositif selon la revendication 1, caractérisé en ce que la pièce de raccord (21 ; 121) est constituée par une section de tube (23 ; 123), dont l'extrémité (24 ; 124) est orientée de préférence dans le sens coaxial par rapport à la cage de soupape (14 ; 114).

6. Dispositif selon la revendication 5, caractérisé en ce que la section de tube (23 ; 123) est munie d'une collerette (25 ; 125) prolongeant l'extrémité (24 ; 124) et orientée dans le sens radial vers l'extérieur.

7. Dispositif selon l'une quelconque des revendications 1 à 6, caractérisé en ce que l'assemblage entre le segment de tube (16 ; 116 ; 216 ; 316 ; 416) et la pièce de raccord (21; 121 ; 221 ; 321 ; 421) est réalisé par un processus de soudage par résistance.

8. Dispositif selon l'une quelconque des revendications 1 à 6, caractérisé en ce que l'assemblage entre le segment de tube (16 ; 116 ; 216 ; 316 ; 416) et la pièce de raccord (21 ; 121 ; 221 ; 321 ; 421) est réalisé par un processus de soudage par fusion.

9. Dispositif selon l'une quelconque des revendications 1 à 6, caractérisé en ce que l'assemblage entre le segment de tube (16 ; 116 ; 216 ; 316 ; 416) et la pièce de raccord (21 ; 121 ; 221 ; 321 ; 421) est réalisé par un processus de brasage fort.

10. Dispositif selon l'une quelconque des revendications 1 à 9, caractérisé en ce que la pièce de raccord (21; 121 ; 221 ; 321 ; 421) est réalisée dans un acier allié.

11. Dispositif selon l'une quelconque des revendications 1 à 10, caractérisé en ce que la pièce de raccord (21 ; 121 ; 221 ; 321 ; 421) est réalisée dans un acier allié à haute résistance à chaud.

12. Dispositif selon l'une quelconque des revendications 1 à 11, caractérisé en ce que la cage de soupape (14 ; 114 ; 214 ; 314 ; 414) est réalisée dans un aluminium coulé sous pression.

13. Dispositif selon l'une quelconque des revendications 1 à 12, caractérisé en ce que le segment de tube (16 ; 116 ; 216 ; 316 ; 416) est muni d'une collerette de fixation (22 ; 122 ; 222 ; 322 ; 422) orientée dans le sens radial vers l'extérieur.

14. Dispositif selon l'une quelconque des revendications 6 à 13, caractérisé en ce que la collerette (25) de la section de tube (23) s'appuie sur la collerette de fixation (22) du segment de tube (16) et les deux collerettes (25, 22) sont assemblées l'une à l'autre par un cordon de soudure annulaire (26), formé par soudage par résistance.

15. Dispositif selon l'une quelconque des revendications 6 à 14, caractérisé en ce qu'une collerette (25, 22), en particulier la collerette (25) du section de tube (23), est munie d'une moulure (27) en saillie par rapport à la collerette de fixation (22), dans la zone de laquelle est formé le cordon de soudure annulaire, formé par soudage par résistance, de préférence par suppression de la moulure (27).

16. Dispositif selon l'une quelconque des revendications 6 à 13, caractérisé en ce que la collerette (125) de la section de tube (123) se prolonge d'une seule pièce par une autre section de tube (128) coaxiale, dont l'arête frontale libre (129) entre en contact dans le sens axial avec la collerette de fixation (122) du segment de tube (116), où elle sera assemblée par soudage, en particulier par soudage par résistance, avec la collerette de fixation (122).

17. Dispositif selon les revendications 2 et 13, caractérisé en ce que le segment de tube (216 ; 316 ; 416) s'appuie dans le sens axial avec sa collerette de fixation (222 ; 322 ; 422) contre une surface frontale de la bague (230 ; 330 ; 430) et est assemblé avec la bague (230 ; 330 ; 430) par un cordon de soudure (232 ; 332 ; 432) formé par soudage par fusion, tel que le soudage à l'arc TIG.

18. Dispositif selon la revendication 17, caractérisé en ce que le cordon de soudure par fusion (232 ; 332 ; 432) est formé par un cordon annulaire périphérique extérieur, qui s'étend sur le bord extérieur de la collerette de fixation (222 ; 322 ; 422) et une partie du bord extérieur de la bague (230 ; 330 ; 430).
